# EUROPÄISCHE PATENTSCHRIFT

(11) **EP 1 323 903 B1**
(45) Veröffentlichungstag und Bekanntmachung des Hinweises auf die Patenterteilung: **10.08.2005**
(21) Anmeldenummer: 02026670.6
(22) Anmeldetag: 29.11.2002
(51) Int. Cl.: F01N 3/20, B01D 53/90, F02B 51/02, B01D 53/94

(54) **Vorrichtung zur Abgasbehandlung einer Verbrennungseinrichtung**
Exhaust treating apparatus of a combustion device
Dispositif de traitement des gaz d'échappement d'un dispositif de combustion

(30) Priorität: 29.12.2001 DE 10164487
(43) Veröffentlichungstag der Anmeldung: 02.07.2003
(73) Patentinhaber: ROBERT BOSCH GMBH, 70442 Stuttgart (DE)
(72) Erfinder: Scheying, Gerd, 70186 Stuttgart (DE); Brinz, Thomas, 73266 Bissingen Unter Der Teck (DE); Ullmann, Ilona, 71254 Ditzingen (DE)

(56) Entgegenhaltungen:
- DE-A- 19 825 148
- DE-C- 10 018 792

## Beschreibung

Die Erfindung betrifft eine Vorrichtung zur Abgasbehandlung einer Verbrennungseinrichtung, insbesondere einer Diesel-Verbrennungseinrichtung, nach dem Oberbegriff des Anspruch 1.

### Stand der Technik

Bislang wird für die Abgasnachbehandlung insbesondere von magerem Dieselabgas von Fahrzeugen das sogenannte "Selective Catalytic Reduction-Verfahren" (SCR-Verfahren) zur Entfernung von Stickoxiden (NOₓ) eingesetzt. Hierbei wird vorzugsweise im Fahrzeug in entsprechenden Reaktoren das Reduktionsmittel Ammoniak (NH₃) gewonnen, das sich mit Stickoxiden selektiv zu Stickstoff und Wasser umsetzt. Das am weitesten verbreitete Verfahren zur NH₃-Generation ist das Einspritzen einer Harnstoff-Wasser-Lösung (HWL) in den Abgastrakt, wobei sich HWL unter Harnstoffhydrolyse zu NH₃ und Kohlendioxid (CO₂) zersetzt. Zur Unterstützung der Hydrolyse befindet sich in Strömungsrichtung des Abgases nach der Einspritzstelle meist ein sogenannter "Hydrolyse-Katalysator".

Ebenso ist bekannt, dass festes Ammoniumcarbamat als Reduktionsmittelspeicher zu verwenden ist, das durch thermische Zersetzung in einem Reaktor im Fahrzeug in NH₃ und CO₂ umgesetzt wird, wobei diese Gase dem Abgastrakt zugeführt werden (vgl. DE 198 27 678 A1).

Nachteilig bei diesem Verfahren ist jedoch, dass das Ammoniumcarbamat zum Verklumpen bzw. zur Biuret-Bildung neigt, feuchtempfindlich ist und im Vorratsspeicher giftiges bzw. reizendes Ammoniak freigesetzt wird.

Weiterhin ist gemäß der Druckschrift DE 198 25 148 A1 ein Verfahren bekannt, wobei zur verbesserten Harnstoffzugabe in das Abgas ein Gemenge aus mit einem Trägermaterial gemischten Harnstoffpulver verwendet wird. Das Trägermaterial ist eine Kohlenwasserstoffverbindung mit einem Schmelzpunkt zwischen einer vorbestimmten Umgebungstemperatur ≥ 30°C und einem üblichen Betriebstemperaturbereich von 70° bis 110°C der Brennkraftmaschine. Gemäß diesem Verfahren wird die Kohlenwasserstoffverbindung in der Abgasanlage im gesamten Temperaturbereich von ca. 150°C bis 850°C rückstandsfrei verbrannt bzw. am Katalysator oxidiert. Hierbei wird der im Abgas freigesetzte Harnstoff mit dem Wasser im Abgas zu Ammoniak umgesetzt und zur NOₓ-Reduktion mittels dem Katalysator verwendet. Zusätzlich wird zur Umwandlung von Harnstoff in Ammoniak mittels Wasser ein Hydrolyse-Katalysator verwendet.

Nachteilig bei der Verwendung von Harnstoffpulver in einem Trägermaterial ist unter anderem, dass durch die Verbrennung bzw. Oxidation des Trägermaterials, z.B. Paraffin, im Abgas bzw. am Katalysator zusätzliche Emissionen entstehen bzw. der Katalysator zusätzlich belastet wird. Zudem kann bei der Abkühlung des geschmolzenen Ausgangmaterials gegebenenfalls Biuret gebildet werden, das zur Beeinträchtigung der Funktionsweise der Anlage führen kann.

### Vorteile und Aufgabe der Erfindung

Aufgabe der Erfindung ist es demgegenüber, eine Vorrichtung zur Abgasbehandlung einer Verbrennungseinrichtung, insbesondere einer Diesel- oder Benzin-Verbrennungseinrichtung, mit einem eine Trägersubstanz und eine wenigstens teilweise zu Ammoniak umsetzbare Wirksubstanz umfassenden Ausgangsstoffgemisch vorzuschlagen, die die Nachteile des Standes der Technik weitestgehend vermeidet und zudem kostengünstig zu betreiben ist.

Diese Aufgabe wird, ausgehend von einer Vorrichtung der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass wenigstens eine Trenneinheit zur Abtrennung der Trägersubstanz bzw. der Wirksubstanz vom Ausgangsstoffgemisch vorgesehen ist.

Mit Hilfe einer derartigen Trenneinheit ist die zu Ammoniak umsetzbare Wirksubstanz bzw. das erzeugte Ammoniak vorteilhaft dem Abgasstrom zuzuführen, wobei die Trägersubstanz in vorteilhafter Weise wieder- bzw. weiterverwertet werden kann. Gemäß der Erfindung ist eine zusätzliche Belastung des Katalysators zur Stickoxidreduktion des Abgases durch das Trägermaterial vorteilhaft vermeidbar, so dass keine nachteiligen umweltrelevanten Emissionen aufgrund einer zu verbrennenden bzw. oxidierenden Trägersubstanz im Abgasstrom entstehen.

In vorteilhafter Weise sind an der Trenneinheit mindestens ein Abfuhrelement zum Abführen der Trägersubstanz von der Trenneinheit sowie ein Zufuhrelement zum Zuführen der Wirksubstanz und/oder des Ammoniaks von der Trenneinheit zu einer katalytisch aktiven Umformeinheit zur wenigstens teilweisen Stickoxidreduktion des Abgasstromes angeordnet. Hierdurch wird die Zufuhr der Wirksubstanz bzw. des Ammoniaks zum Abgasstrom vorteilhaft ermöglicht und zugleich ein gegebenenfalls nachteiliges Ansammeln von abgetrennter Trägersubstanz in der Trenneinheit vermieden.

Vorzugsweise ist das Abfuhrelement zwischen der Trenneinheit und der Verbrennungseinrichtung angeordnet, so dass in vorteilhafter Weise die Trägersubstanz als Betriebsstoff der Verbrennungseinrichtung zur Verfügung steht. Vorzugsweise wird die Trägersubstanz in der Verbrennungseinrichtung als Brennstoff verbrannt bzw. oxidiert, so dass eine energetische Verwertung der Trägersubstanz zum Betrieb der Verbrennungseinrichtung bzw. eines entsprechenden Fahrzeuges, z.B. PKW oder LKW, gewährleistet werden kann.

Darüber hinaus ist denkbar, dass die Trägersubstanz möglicherweise als Schmierstoff oder dergleichen der Verbrennungseinrichtung zur Verfügung gestellt wird. Bei entsprechender Auswahl der Trägersubstanz sowie bei entsprechender Menge kann möglicherweise ein bisher übliches Auffüllen entsprechender Schmierstoffvorräte der Verbrennungseinrichtung wenigstens teilweise entfallen. Beispielsweise kann hierfür unter Zuhilfenahme eines entsprechenden Zwischenspeichers eine Entkopplung zwischen dem Anfall und dem Bedarf an Trägersubstanz für den jeweiligen Verwendungszweck erreicht werden.

Generell ist von Vorteil, wenigstens eine Trägersubstanz-Speichereinheit zur Speicherung der abgetrennten Trägersubstanz vorzusehen. Hiermit wird gewährleistet, dass die abgetrennte Trägersubstanzmenge dem jeweiligen Bedarf anpassbar ist. Beispielsweise kann die Trägersubstanz in besonderen Betriebsphasen, z.B. während einer Volllastphase, der Verbrennungseinrichtung zugeführt werden.

Darüber hinaus kann mit Hilfe der Trägersubstanz-Speichereinheit eine Speicherung der Trägersubstanz zur stofflichen Wiederverwertung in vorteilhafter Weise vorgesehen werden, wobei diese gegebenenfalls der Trägersubstanz-Speichereinheit in gewissen Abständen entnommen wird und vorzugsweise zur Produktion eines neuen Ausgangsstoffgemisches zur Verfügung zu stellen ist. Im Allgemeinen kann die Entnahme der Trägersubstanz aus der Trägersubstanz-Speichereinheit zeitlich mit einem Befüllen eines Brennstofftanks bzw. Schmiermittelvorrates der Verbrennungseinrichtung und/oder des Ausgangsstoffgemisches gekoppelt werden.

In einer vorteilhaften Ausführungsform der Erfindung umfasst ein Brennstofftank zur Speicherung eines Brennstoffs der Verbrennungseinrichtung die Trägersubstanz-Speichereinheit. Hierdurch wird ermöglicht, dass bei vorteilhaften Trägersubstanzen eine Vermischung bzw. Lösung der Trägersubstanz mit bzw. im Brennstoff ermöglicht wird. Mit Hilfe dieser Maßnahme ist die Verwendung von zwei separaten Speichereinheiten vermeidbar, so dass sich hierdurch in vorteilhafter Weise der konstruktive Aufwand und somit die wirtschaftlichen Kosten reduzieren.

Weiterhin kann beispielsweise bei Verwendung von Paraffin oder dergleichen als Trägersubstanz die Cetanzahl von Diesel in vorteilhafter Weise verändert werden. Möglicherweise kann bei Verwendung von Benzin und einer entsprechenden Trägersubstanz eine vorteilhafte Veränderung der Oktanzahl erfolgen.

In einer besonderen Variante der Erfindung ist wenigstens eine Zwischenspeichereinheit zur Zwischenspeicherung der abgetrennten Wirksubstanz und/oder des Ammoniaks vorgesehen. Grundsätzlich, d.h. auch ohne die Trenneinheit gemäß der Erfindung, ist eine Zwischenspeichereinheit zur Zwischenspeicherung der abgetrennten Wirksubstanz und/oder des Ammoniaks von Vorteil. Mittels einer entsprechenden Zwischenspeichereinheit ist eine zeitliche Entkopplung der Umsetzung der Wirksubstanz bzw. der Erzeugung des Ammoniaks und der Zudosierung dieser zum Abgasstrom realisierbar.

Vorzugsweise wird mittels eines entsprechenden , Zwischenspeichers die abgetrennte Wirksubstanz bzw. das erzeugte Ammoniak vor allem für eine Startphase der Verbrennungseinrichtung und/oder des Katalysators bzw. der katalytischen aktiven Umformeinheit verwendet. Gegebenenfalls wird mit Hilfe einer Druckerzeugungseinheit, wie z.B. eine Pumpe oder dergleichen, die abgetrennte Wirksubstanz bzw. das Ammoniak mit einem vorteilhaften Überdruck in der Zwischenspeichereinheit zwischengespeichert, so dass diese beispielsweise in einer Kaltstartphase in vorteilhafter Weise ohne relativ großen Energieeinsatz als Stickoxid-Reduktionsmittel zur Verfügung steht. Ein entsprechend druckbeaufschlagter Zwischenspeicher kann vergleichsweise klein dimensioniert werden, so dass sich die entsprechenden Herstellungs- und Betriebskosten verringern.

Generell kann eine zum Teil beim Stand der Technik notwendige Ammoniakerzeugung mittels entsprechend separater Katalysatoren entfallen. Dies führt gegebenenfalls zur Verringerung des konstruktiven Aufwands sowie zur Reduzierung des Energieeinsatzes insbesondere für die Erwärmung entsprechender katalytisch aktiver Umformeinheiten, die im Allgemeinen in einer Kaltstartphase auf eine bestimmte Betriebstemperatur zu erwärmen sind.

Zudem wird insbesondere mittels einer Entleerung des Zwischenspeichers während der Kaltstartphase ermöglicht, dass der Druck der Zwischenspeichereinheit vergleichsweise schnell so weit verringert wird, bis dieser Druck keine Gefahr bei einer Teilnahme eines entsprechenden Fahrzeuges im Straßenverkehr darstellt. Dies trifft grundsätzlich auch bei einer Verwendung einer HWL in einem relativ großen HWL-Flüssigkeitsspeicher zur Stickoxid-Reduktion der Abgase zu, wobei die HWL insbesondere in Abhängigkeit der Temperatur im Laufe der Zeit Ammoniak freisetzt, das in zuvor dargestellter Weise mit Hilfe einer vorteilhaften Zwischenspeichereinheit zwischengespeichert werden kann.

In einer besonderen Weiterbildung der Erfindung umfasst eine Ausgangsstoffspeichereinheit zur Speicherung des Ausgangsstoffgemisches die Trenneinheit. Hiermit wird ermöglicht, dass eine gegebenenfalls separate Ausgangsstoffspeichereinheit im Allgemeinen entfallen kann, wodurch sich die wirtschaftlichen Kosten der erfindungsgemäßen Vorrichtung verringern. Vorteilhafterweise ist sowohl die Speicherung als auch die Trennung des Ausgangsstoffgemisches mit einer einzigen Baueinheit, möglicherweise lediglich als vergleichsweise einfach aufgebautes Gefäß oder dergleichen, realisierbar. Gegebenenfalls wird die Trennung des Ausgangsstoffgemisches wenigstens in die Trägersubstanz und die Wirksubstanz bzw. das Ammoniak in einem bestimmten, vorgegebenen Bereich der Ausgangsstoffspeichereinheit abgetrennt.

Denkbar sind Trenneinheiten, die beispielsweise mittels einem zentrifugalen, chemischen Ausfällverfahren und/oder mittels unterschiedlicher Dichten der Substanzen betrieben werden. In vorteilhafter Weise wird die Abtrennung gemäß der Erfindung mittels der Trenneinheit unter Zuhilfenahme von Wärmeenergie realisiert. Vorzugsweise ist wenigstens eine Heizvorrichtung zur Erwärmung der Trenneinheit, Zwischenspeichereinheit, Trägersubstanz-Speichereinheit und/oder mindestens eines der Abfuhrelemente bzw. des Zufuhrelementes vorgesehen. In vorteilhafter Weise wird hierdurch eine Abtrennung der Trägersubstanz bzw. Wirksubstanz vom Ausgangsstoffgemisch ermöglicht. Die Wirksubstanz und/oder das Ausgangsstoffgemisch verändert sich vorzugsweise in Abhängigkeit der Temperatur. Beispielsweise wird diese bzw. dieses chemisch umgesetzt und/oder es ändern sich stoffliche Parameter, wie die Viskosität bzw. der Aggregatzustand, z.B. von fest in flüssig.

Vorteilhafterweise umfasst die wenigstens teilweise zu Ammoniak umsetzbare Wirksubstanz Ammoniumcarbonat bzw. Ammoniumhydrogencarbonat. Bei deren Verwendung ist besonders von Vorteil, dass diese Substanzen durch Wärmezufuhr in gasförmiges Ammoniak und Kohlendioxid sowie dampfförmiges Wasser umgesetzt werden.

Darüber hinaus weist festes Ammoniumcarbonat eine relativ hohe Ammoniakspeicherdichte von 2 Mol Ammoniak pro Mol Substanz auf und wird bereits bei Temperaturen von ca. 58°C vollständig umgesetzt. Auch kann Harnstoff oder Ammoniumcarbamat als Wirksubstanz verwendet werden, wobei gegenüber Ammoniumcarbonat etwas höhere Temperaturen zur Umsetzung in Ammoniak notwendig sind und dementsprechend die Trenneinheit entsprechend stärker zu erwärmen ist.

Weiterhin ist Ammoniumcarbonat bzw. -hydrogencarbonat vergleichsweise kostengünstig gegenüber Harnstoff oder Ammoniumcarbamat. Generell kann auch eine HWL als Wirksubstanz verwendet werden, wobei denkbar ist, die im Allgemeinen flüssige HWL gegebenenfalls in einer vergleichsweise festen Trägersubstanzhülle einzuschließen. Diese "HWL-Vorrats-Behältnisse" sind möglicherweise relativ leicht zu handhaben und zudem kann ein Einfrieren der HWL ohne wesentliche Beeinträchtigungen des Betriebs der erfindungsgemäßen Vorrichtung sein.

Vorzugsweise umfasst die Trägersubstanz ein Paraffin, Wachs, Stearin, Fett, Silikonöl und/oder den Brennstoff bzw. höhermolekulare Fettsäuren, oligomere Fettsäureester, oligomere Silikonöle, usw.. Generell können in vorteilhafter Weise alle Trägersubstanzen verwendet werden, die im Allgemeinen bei Umgebungstemperaturen fest sind und bereits bei Temperaturen ab ca. 50°C in den flüssigen Zustand übergehen.

Alternativ oder in Kombination hierzu können alle Trägersubstanzen verwendet werden, die bei Umgebungstemperaturen eine chemische Umsetzung bzw. ein Freisetzen von Ammoniak wirkungsvoll verhindern. Das heißt, dass bei dieser Variante insbesondere auch Flüssigkeiten wie der Brennstoff oder andere Betriebsstoffe der Verbrennungseinrichtung vorteilhaft zu verwenden sind. Gegebenenfalls bei flüssigen Trägersubstanzen und festen Wirksubstanzen ist die Trenneinheit zur Fest-Flüssig-Trennung auszubilden.

In einer vorteilhaften Ausführungsform der Erfindung ist die Trägersubstanz als Mantelschicht zur Ummantelung der Wirksubstanz ausgebildet. Beispielsweise können sogenannte Pellets, Stäbe oder dergleichen verwendet werden, wobei im inneren Bereich die Wirksubstanz und im äußeren Bereich die Trägersubstanz als Mantelschicht angeordnet ist.

In einer besonderen Weiterbildung der Erfindung ist das Ausgangsstoffgemisch als Suspension bzw. Lösung ausgebildet. Vor allem mit Hilfe einer Suspension aus Trägersubstanz und Wirksubstanz ist eine vergleichsweise hohe Speicherdichte der Wirksubstanz pro Volumeneinheit realisierbar. Beispielsweise ist festes Ammoniumcarbonat-Pulver in einer Wachsmatrix dispergiert.

Sowohl bei der Verwendung von Pellets, Stäben oder dergleichen als auch von Lösungen, Dispersionen bzw. Suspensionen wird einerseits eine Ammoniakfreisetzung und andererseits unter anderem die Hydrolyse der Wirksubstanz aufgrund feuchter Umgebungsbedingungen wirkungsvoll verringert bzw. verhindert.

Vorteilhafterweise ist ein Dosierelement, wie z.B. ein Ventil oder dergleichen, zur Dosierung der abgetrennten Wirksubstanz bzw. des Ammoniaks in den Abgasstrom vorgesehen. Hierbei wird insbesondere mit Hilfe einer elektronischen Steuereinheit und wenigstens einem vorteilhaften Sensor die zugeführte Ammoniakmenge vorteilhaft gesteuert.

Die abgetrennte Wirksubstanz bzw. das Ammoniak kann sowohl kontinuierlich als auch diskontinuierlich dem Abgasstrom zugeführt werden.

Bei der Verwendung von Ammoniumcarbonat bzw. Ammoniumhydrogencarbonat perlt im Allgemeinen Ammoniak bei Erwärmung aus dem Paraffin oder dergleichen aus, wodurch dieses einerseits, unter anderem vergleichbar mit einem Dampfkochtopf", vorzugsweise im oberen Bereich der Trenneinheit als gasförmiges Fluid zusammen mit dem Kohlendioxid sowie dem dampfförmigen Wasser abzuführen ist und dem Abgaskatalysator zugeführt werden kann.

Generell wird in vorteilhafter Weise bei der Abkühlung des Ammoniaks Ammoniumcarbonat wieder gebildet bzw. auskondensiert, so dass bei erneuter Erwärmung dies wieder zu Ammoniak umsetzbar ist. Diese vorteilhafte Eigenschaft des Ammoniumcarbonats bzw. Ammoniaks ist insbesondere für Ruhephasen der Verbrennungseinrichtung bzw. für Standzeiten des Fahrzeugs von besonderer Relevanz, da keine nachteiligen Umwandlungsprodukte die Betriebsweise der Vorrichtung gemäß der Erfindung beeinträchtigen.

### Ausführungsbeispiel

Ein Ausführungsbeispiel ist in der Zeichnung dargestellt und wird anhand der nachfolgenden Figuren näher erläutert.

Im Einzelnen zeigt:
- Fig. 1: einen schematischen Aufbau einer erfindungsgemäßen Vorrichtung und
- Fig. 2: verschiedene Ausgangsstoffgemische in schematischer Darstellung.

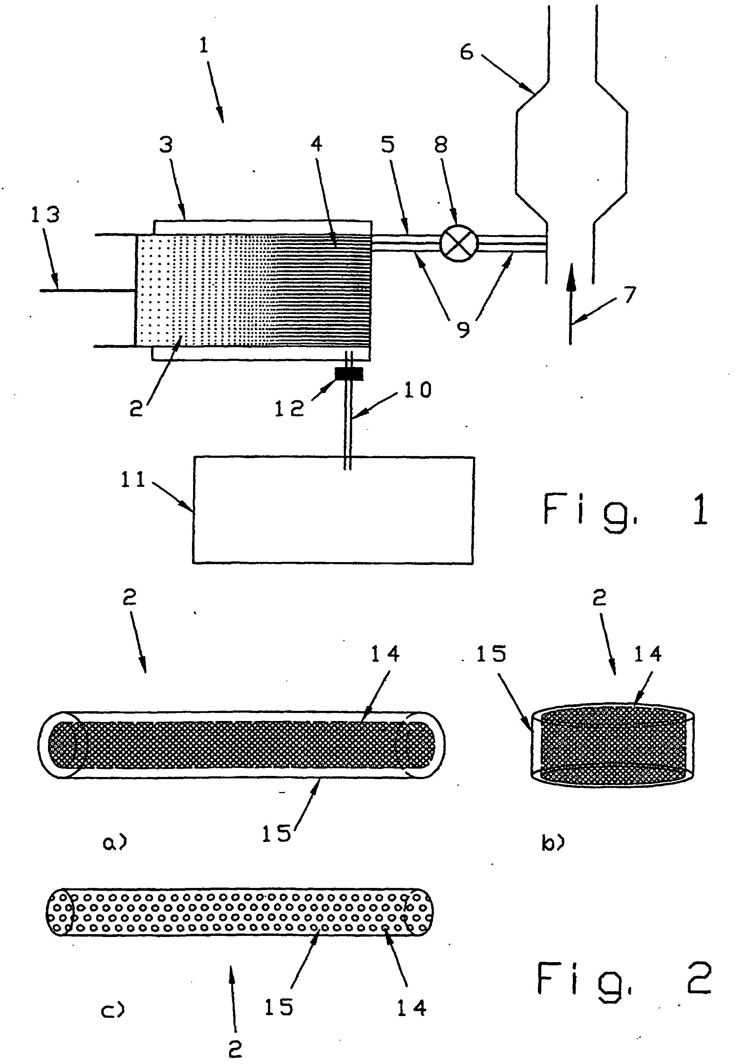

In Fig. 1 ist schematisch eine Trenneinheit 1 dargestellt, wobei eine Carbonatpaste 2 als Ausgangsstoffgemisch 2 verwendet wird. Die Carbonatpaste 2 ist insbesondere als Dispersion von festem Ammoniumcarbonatpulver 14 in einer Wachsmatrix 15, insbesondere aus Paraffin, ausgebildet.

Bei der Verwendung von Ammoniumcarbonat 14 ist vor allem von Vorteil, dass dieses aufgrund entsprechender Trägersubstanzen 15 vor Umwelteinflüssen, wie z.B. Feuchtigkeit, geschützt ist. Darüber hinaus wird das bereits bei Raumtemperatur Ammoniak erzeugende Ammoniumcarbonat 14 mittels der Trägersubstanz 15 vor Ammoniakemissionen geschützt. Zudem wird eine im Verhältnis zur Masse größtmöglichen Ammoniakspeicherung in einem Feststoff 14 bei gleichzeitig niedrigster Zersetzungstemperatur der Wirksubstanz 14 realisiert. Hierdurch wird die Bereitstellung von Ammoniak bereits nach verhältnismäßig kurzer Zeit nach dem Start des Motors bzw. nach Beginn der Erwärmung der Trenneinheit 1 realisierbar.

Gegenüber der Verwendung von HWL 14 zeichnet sich Ammoniumcarbonat 14 zudem durch das relativ geringe Gewicht sowie dadurch aus, dass es keine nachteilige Nebenprodukte bei der Zersetzung freisetzt, vergleichsweise einfach zu dosieren ist und keine Einfriergefahr besteht.

Die Trägersubstanz 15 ist insbesondere derart ausgebildet, dass diese frühestens bei ca. 40°C und spätestens bei ca. 60°C flüssig wird und davor möglichst als Feststoff 15 vorliegt, wobei die Trägersubstanz 15 einen möglichst scharfen Schmelzpunkt aufweist, d.h. innerhalb einem vergleichsweise engen Temperaturbereich vom festen in den flüssigen Aggregatzustand übergeht, so dass das erzeugte Ammoniak leicht durch die Trägersubstanz 15 diffundieren bzw. der Trenneinheit 1 entnommen werden kann.

Darüber hinaus wird in vorteilhafter Weise eine vergleichsweise umweltverträgliche Trägersubstanz 15 verwendet, wodurch die Handhabung sowie der Betrieb verbessert als auch bei Unfällen oder dergleichen es zu keinen nachteiligen Einwirkungen auf die Umwelt kommt.

Gemäß Fig. 1 wird die Paste 2 mittels einer Heizung 3 erwärmt, die beispielsweise elektrisch und/oder mittels eines Heizmediums, z.B. Wasser bzw. Kühlwasser der Verbrennungseinrichtung oder dergleichen, betrieben wird. Die Heizung 3 ist vorzugsweise derart ausgebildet, dass in einer Reaktionszone 4 die Abtrennung des nicht näher dargestellten Paraffins bzw. der Wirksubstanz 14 von der Paste 2 erfolgt. Neben der Abtrennung der Trägersubstanz 15 wird zudem aufgrund thermischer Zersetzung die Wirksubstanz 14 insbesondere in Ammoniak umgesetzt, das durch ein im oberen Bereich der Trenneinheit 1 angeordnetes Zufuhrelement 5 abgeführt und einem Katalysator 6 bzw. Abgasstrom 7 zuzuführen ist.

Das Zufuhrelement 5 umfasst insbesondere ein Dosierelement 8 bzw. Ventil 8, womit eine dosierbare Zuführung des Ammoniaks mittels einer nicht näher dargestellten elektrischen Steuereinheit realisiert wird.

Darüber hinaus kann in vorteilhafter Weise eine Heizung 9 zur Beheizung des Zufuhrelementes 5 vorgesehen werden. Hierdurch wird unter anderem gewährleistet, dass selbst bei verhältnismäßig langer Ausführung des Zufuhrelementes 5 eine Kondensation des Ammoniaks zu Ammoniumcarbonat 14 verhindert werden kann.

Das Paraffin 15 bzw. die Trägersubstanz 15 wird mittels einem Abfuhrelement 10 einem Dieseltank 11 zugeführt. Die Zugabe von Paraffin 15 zu Diesel erhöht in vorteilhafter Weise die Cetanzahl, wodurch die Verbrennung des entsprechend positiv veränderten Dieselkraftstoffs in einer nicht näher dargestellten Verbrennungseinrichtung bzw. eines Dieselmotors verbessert wird. Zur Verhinderung nachteiliger Einträge in den Dieseltank 11 wird ein Filter 12 vorgesehen.

Ein Stempel 13 gewährleistet eine Druckbeaufschlagung der Paste 2 bzw. ein Nachschieben von Paste 2 in die Reaktionszone 4. Da im Bereich der Reaktionszone 4 mittels dem Zufuhrelement 5 gasförmiges Fluid, das insbesondere Ammoniak, Kohlendioxid sowie dampfförmiges Wasser umfasst, und flüssiges Paraffin 15 abgeführt wird, ist insbesondere ein Nachschieben bzw. eine Zuführung der Paste 2 in die Reaktionszone vorzusehen.

Gegebenenfalls kann ein nicht näher dargestellter Zwischenspeicher zur Speicherung von abgetrennter Wirksubstanz 14 bzw. bereits erzeugtem Ammoniak und/oder der Nebenprodukte vorgesehen werden.

Mit Hilfe der Heizung 3 kann möglicherweise vor einem Start der Verbrennungseinrichtung die Trenneinheit 1 beheizt und somit verfügbares Ammoniak erzeugt werden, wodurch gegebenenfalls ein Zwischenspeicher zur Zwischenspeicherung des Ammoniaks entbehrlich wird. Generell kann durch eine vergleichsweise starke Erwärmung der Trenneinheit 1 bzw. der Reaktionszone 4 ein relativ hoher Druck von ca. 2 bis 5 bar erzeugt werden, so dass eine separate Druckerzeugungseinheit entfallen kann.

Im Gegensatz zur dargestellten Ausführungsform kann auch eine Trenneinheit 1 vorgesehen werden, bei der beispielsweise auf eine Stempelanordnung 13 gemäß Fig. 1 verzichtet wird. Beispielsweise wird ein Strang 2 aus einer Ammoniumcarbonatpaste 2 in einer Trenneinheit 1 gespeichert, wobei die Heizung 3 derart ausgebildet ist, dass die Reaktionszone 4 vorzugsweise stufenweise längs des Stranges 2 wandert. Beispielsweise können in einer ersten Erwärmung die ersten zehn Prozent des Stranges 2 erwärmt und mittels dem Zufuhrelement 5 bzw. dem Abfuhrelement 10 den jeweiligen Vorrichtungen 11 bzw. 6 zugeführt werden. In weiteren Stufen können entsprechend die nächsten zehn Prozent, usw. des Strangs 2 erwärmt werden.

In Fig. 2 sind schematisch verschiedenste Ausführungsformen von Ausgangsstoffgemischen 2 dargestellt. Gemäß Fig. 2a ist beispielhaft ein Stab 2 dargestellt, wobei die Wirksubstanz 14 von einer Trägersubstanz 15 ummantelt ist. Gemäß Fig. 2b ist ein Pellet 2 dargestellt, das ebenso eine von einer Trägersubstanz 15 ummantelten Wirksubstanz 14 aufweist. Fig. 2c stellt einen Stab 2 bzw. einen Strang 2 dar, der als Dispersion 2 der Wirksubstanz 14 und der Trägersubstanz 15 realisiert ist.

Der Stab 2 gemäß Fig. 2a, c sowie das Pellet 2 gemäß Fig. 2b kann auch andere, nicht näher dargestellte Formen aufweisen. Die Wirksubstanz 14 kann vorzugsweise als Pellet 2, Stab 2 oder dergleichen gepresst und anschließend mit der Trägersubstanz 15 beschichtet bzw. belegt werden. Beispielsweise können die Pellets 2 einen Durchmesser von ca. 3 mm bis 1 cm aufweisen, wobei eine ca. 500 µm bis 1 mm dicke Trägersubstanzschicht 15 vorgesehen ist. Bei Verwendung von Ammoniumcarbonatpulver 14 kann dieses Teilchen mit einem Durchmesser von ca. 1 µm bis 1 mm umfassen.

Generell kann gemäß der vorliegenden Erfindung im Vergleich zum Stand der Technik eine vergleichsweise kompakte Anlage realisiert werden.

## Patentansprüche

1. Vorrichtung zur Abgasbehandlung einer Verbrennungseinrichtung, insbesondere einer Diesel-Verbrennungseinrichtung, mit einem eine Trägersubstanz (15) und eine wenigstens teilweise zu Ammoniak umsetzbare Wirksubstanz (14) umfassenden Ausgangsstoffgemisch (2), **dadurch gekennzeichnet, dass** wenigstens eine Trenneinheit (1) zur Abtrennung der Trägersubstanz (15) bzw. der Wirksubstanz (14) vom Ausgangsstoffgemisch (2) vorgesehen ist.

2. Vorrichtung nach Anspruch 1, **dadurch gekennzeichnet, dass** an der Trenneinheit (1) mindestens ein Abfuhrelement (10) zum Abführen der Trägersubstanz (15) von der Trenneinheit (1) sowie ein Zufuhrelement (5) zum Zuführen der Wirksubstanz (14) und/oder des Ammoniaks von der Trenneinheit (1) zu einer katalytisch aktiven Umformeinheit (6) zur wenigstens teilweisen Stickoxid-Reduktion des Abgasstromes (7) angeordnet sind.

3. Vorrichtung nach einem der vorgenannten Ansprüche, **dadurch gekennzeichnet, dass** das Abfuhrelement (10) zwischen der Trenneinheit (1) und der Verbrennungseinrichtung angeordnet ist.

4. Vorrichtung nach einem der vorgenannten Ansprüche, **dadurch gekennzeichnet, dass** wenigstens eine Trägersubstanz-Speichereinheit (11) zur Speicherung der abgetrennten Trägersubstanz (15) vorgesehen ist.

5. Vorrichtung nach einem der vorgenannten Ansprüche, **dadurch gekennzeichnet, dass** ein Brennstoff-Tank (11) zur Speicherung eines Brennstoffs der Verbrennungseinrichtung die Trägersubstanz-Speichereinheit (11) umfasst.

6. Vorrichtung nach einem der vorgenannten Ansprüche, **dadurch gekennzeichnet, dass** wenigstens eine Zwischenspeichereinheit zur Zwischenspeicherung der abgetrennten Wirksubstanz (14) und/oder des Ammoniaks vorgesehen ist.

7. Vorrichtung nach einem der vorgenannten Ansprüche, **dadurch gekennzeichnet, dass** eine AusgangsstoffSpeichereinheit (1) zur Speicherung des Ausgangsstoffgemisches (2) die Trenneinheit (1) umfasst.

8. Vorrichtung nach einem der vorgenannten Ansprüche, **dadurch gekennzeichnet, dass** wenigstens eine Heizvorrichtung (3, 9) zur Erwärmung der Trenneinheit (1), Zwischenspeichereinheit, Trägersubstanz-Speichereinheit (11), des Zufuhrelements (5) und/oder des Abfuhrelements (10) vorgesehen ist.

9. Vorrichtung nach einem der vorgenannten Ansprüche, **dadurch gekennzeichnet, dass** die wenigstens teilweise zu Ammoniak umsetzbare Wirksubstanz (14) Ammoniumcarbonat umfasst.

10. Vorrichtung nach einem der vorgenannten Ansprüche, **dadurch gekennzeichnet, dass** die Trägersubstanz (15) ein Paraffin, Wachs, Stearin, Fett, Silikonöl und/oder den Brennstoff der Verbrennungsvorrichtung umfasst.

11. Vorrichtung nach einem der vorgenannten Ansprüche, **dadurch gekennzeichnet, dass** die Trägersubstanz (15) als Mantelschicht zur Ummantelung der Wirksubstanz (14) ausgebildet ist.

12. Fahrzeug mit einer Vorrichtung zur Abgasbehandlung einer Verbrennungseinrichtung, insbesondere einer Diesel-Verbrennungseinrichtung, und einem eine Trägersubstanz (15) und eine wenigstens teilweise zu Ammoniak umsetzbare Wirksubstanz (14) umfassenden Ausgangsstoffgemisch (2), **dadurch gekennzeichnet, dass** die Vorrichtung nach einem der vorgenannten Ansprüche ausgebildet ist.

13. Verfahren zur Abgasbehandlung einer Verbrennungseinrichtung, insbesondere einer Diesel-Verbrennungseinrichtung, mit einem eine Trägersubstanz (15) und eine wenigstens teilweise zu Ammoniak umsetzbare Wirksubstanz (14) umfassenden Ausgangsstoffgemisch (2), **dadurch gekennzeichnet, dass** eine Abtrennung der Trägersubstanz (15) bzw. der Wirksubstanz (14) vom Ausgangsstoffgemisch (2) mittels einer Trenneinheit (1) erfolgt.

14. Verfahren nach Anspruch 13, **dadurch gekennzeichnet, dass** eine Vorrichtung nach einem der vorgenannten Ansprüche verwendet wird.

## Claims

1. Apparatus for treating the exhaust gas from a combustion device, in particular a diesel combustion device, with a starting material mixture (2) comprising a carrier substance (15) and an active substance (14), which can be at least partially converted into ammonia, **characterized in that** there is at least one separation unit (1) for separating the carrier substance (15) or the active substance (14) from the starting material mixture (2).

2. Apparatus according to Claim 1, **characterized in that** at least one discharge element (10) for discharging the carrier substance (15) from the separation unit (1) and a feed element (5) for feeding the active substance (14) and/or the ammonia from the separation unit (1) to a catalytically active conversion unit (6) for at least partial reduction of the nitrogen oxides in the exhaust-gas stream (7) are arranged on the separation unit (1).

3. Apparatus according to one of the preceding claims, **characterized in that** the discharge element (10) is arranged between the separation unit (1) and the combustion device.

4. Apparatus according to one of the preceding claims, **characterized in that** there is at least one carrier substance storage unit (11) for storing the carrier substance (15) which has been separated off.

5. Apparatus according to one of the preceding claims, **characterized in that** a fuel tank (11) for storing a fuel for the combustion device comprises the carrier substance storage unit (11).

6. Apparatus according to one of the preceding claims, **characterized in that** there is at least one temporary storage unit for temporarily storing the ammonia and/or the active substance (14) which has been separated off.

7. Apparatus according to one of the preceding claims, **characterized in that** a starting material storage unit (1) for storing the starting material mixture (2) comprises the separation unit (1).

8. Apparatus according to one of the preceding claims, **characterized in that** there is at least one heating apparatus (3, 9) for heating the separation unit (1), temporary storage unit, carrier substance storage unit (11), of the feed element (5) and/or the discharge element (10).

9. Apparatus according to one of the preceding claims, **characterized in that** the active substance (14) which can be at least partially converted into ammonia comprises ammonium carbonate.

10. Apparatus according to one of the preceding claims, **characterized in that** the carrier substance (15) comprises a paraffin, wax, stearin, grease, silicone oil and/or the fuel of the combustion apparatus.

11. Apparatus according to one of the preceding claims, **characterized in that** the carrier substance (15) is in the form of a sheathing layer for sheathing the active substance (14).

12. Vehicle having an apparatus for treating the exhaust gas from a combustion device, in particular a diesel combustion device, and a starting material mixture (2) comprising a carrier substance (15) and an active substance (14) which can be at least partially converted into ammonia, **characterized in that** the apparatus is designed in accordance with one of the preceding claims.

13. Method for treating the exhaust gas from a combustion device, in particular a diesel combustion device, with a starting material mixture (2) comprising a carrier substance (15) and an active substance (14) which can be at least partially converted into ammonia, **characterized in that** the carrier substance (15) or the active substance (14) is separated from the starting material mixture (2) by means of a separation unit (1).

14. Method according to Claim 13, **characterized in that** an apparatus according to one of the preceding claims is used.

## Revendications

1. Dispositif pour traiter les gaz d'échappement d'une installation de combustion, en particulier d'une installation de combustion Diesel, à l'aide d'un mélange de matières premières (2) composé d'un matériau support (15) et d'une substance active (14) qui peut au moins en partie être transformée en ammoniac,
**caractérisé en ce qu'**
au moins une unité de séparation (1) est prévue pour séparer du mélange de matières premières (2) le matériau support (15) ou la substance active (14).

2. Dispositif selon la revendication 1,
**caractérisé en ce que**
l'unité de séparation (1) comporte au moins un élément d'évacuation (10) pour évacuer de l'unité de séparation (1) le matériau support (15) ainsi qu'un élément d'alimentation (5) pour acheminer la substance active (14) et/ou l'ammoniac depuis l'unité de séparation (1) jusqu'à une unité de transformation (6) à action catalytique pour soumettre le courant de gaz d'échappement (7) à une réduction au moins partielle de l'oxyde d'azote.

3. Dispositif selon l'une des revendications précédentes,
**caractérisé en ce que**
l'élément d'évacuation (10) est placé entre l'unité de séparation (1) et l'installation de combustion.

4. Dispositif selon l'une des revendications précédentes,
**caractérisé en ce qu'**
au moins une unité de stockage (11) destinée au matériau support est prévue pour stocker le matériau support (15) séparé.

5. Dispositif selon l'une des revendications précédentes,
**caractérisé en ce qu'**
un réservoir de carburant (11) pour stocker un carburant de l'installation de combustion comprend l'unité de stockage (11) destinée au matériau support.

6. Dispositif selon l'une des revendications précédentes,
**caractérisé en ce qu'**
au moins une unité de stockage temporaire est prévue pour stocker temporairement la substance active (14) séparée et/ou l'ammoniac.

7. Dispositif selon l'une des revendications précédentes,
**caractérisé en ce qu'**
une unité de stockage de matières premières (1) pour stocker le mélange de matières premières (2) entoure l'unité de séparation (1).

8. Dispositif selon l'une des revendications précédentes,
**caractérisé en ce qu'**
au moins un dispositif de chauffage (3, 9) est prévu pour chauffer l'unité de séparation (1), l'unité de stockage temporaire, l'unité de stockage (11) destinée au matériau support, l'élément d'alimentation (5) et/ou l'élément d'évacuation (10).

9. Dispositif selon l'une des revendications précédentes,
**caractérisé en ce que**
la substance active (14) qui peut être au moins en partie transformée en ammoniac comprend du carbonate d'ammonium.

10. Dispositif selon l'une des revendications précédentes,
**caractérisé en ce que**
le matériau support (15) comprend de la paraffine, de la cire, de la stéarine, de la graisse, de l'huile de silicone et/ou le carburant de l'installation de combustion.

11. Dispositif selon l'une des revendications précédentes,
**caractérisé en ce que**
le matériau support (15) forme la couche d'enveloppe destinée à enrober la substance active (14).

12. Véhicule comportant un dispositif pour traiter les gaz d'échappement d'une installation de combustion, en particulier d'une installation de combustion Diesel, au moyen d'un mélange de matières premières (2) composé d'un matériau support (15) et d'une substance active (14) qui peut au moins en partie être transformée en ammoniac,
**caractérisé en ce que**
le dispositif est conçu d'après l'une des revendications précédentes.

13. Procédé pour traiter les gaz d'échappement d'une installation de combustion, en particulier d'une installation de combustion Diesel, à l'aide d'un mélange de matières premières (2) composé d'un matériau support (15) et d'une substance active (14) qui peut au moins en partie être transformée en ammoniac,
**caractérisé en ce que**
le matériau support (15) ou la substance active (14) est séparé du mélange de matières premières (2) à l'aide d'une unité de séparation (1).

14. Procédé selon la revendication 13,
**caractérisé en ce qu'**
on utilise un dispositif d'après l'une des revendications précédentes.
